# EUROPÄISCHE PATENTSCHRIFT

(11) **EP 3 767 046 B1**
(45) Veröffentlichungstag und Bekanntmachung des Hinweises auf die Patenterteilung: **19.04.2023**
(21) Anmeldenummer: 20181666.7
(22) Anmeldetag: 23.06.2020
(51) Int. Cl.: E03B 9/02, A62C 35/20, A62C 37/50, E03B 9/04, E03B 9/08, E03B 9/12, G01L 9/00, G01L 1/22, G01L 5/00, G01L 11/00

(54) **ARMATUR**
FITTING
ARMATURE

(30) Priorität: 16.07.2019 DE 102019119258
(43) Veröffentlichungstag der Anmeldung: 20.01.2021
(73) Patentinhaber: VAG GmbH, 68305 Mannheim (DE)
(72) Erfinder: Jurisic, Ivan, 63679 Schotten (DE)
(74) Vertreter: Charrier Rapp & Liebau

(56) Entgegenhaltungen:
- EP-A1- 2 075 494
- CN-A- 107 268 721
- US-A- 6 058 957
- US-A1- 2012 004 866
- US-B2- 9 861 848

## Beschreibung

Die Erfindung betrifft eine Armatur nach dem Oberbegriff des Anspruchs 1.

Eine derartige, als Hydrant ausgebildete Armatur ist aus der DE 10 2007 060 624 A1 bekannt. Diese enthält ein an eine Wasserleitung anschließbares Gehäuse und einen in diesem verschiebbar angeordneten Ventilkörper, der durch einen als Spindel-Spindelmutter-Antrieb ausgebildeten Stellantrieb zwischen einer Offenstellung zum Öffnen eines Durchgangs von einer Zuströmöffnung zu einem Abgangskanal im Gehäuse und einer Schließstellung zur Absperrung des Durchgangs im Gehäuse verschiebbar ist. Der Stellantrieb enthält eine mit dem Ventilkörper verbundene Spindelmutter und eine zugehörige Stellspindel, die in einen am Gehäuse angeordneten Lagerteil axial gesichert und drehbar gelagert ist. Solche Hydranten werden vielfach zur Abzweigung von Wasser aus einer unterirdisch verlaufenden Wasserleitung z.B. für Feuerlöscheinrichtungen oder zur anderweitigen Wasserverteilung und -versorgung eingesetzt. Sie sind oftmals als Überflurhydranten oder als Unterflur- bzw. Schachthydranten mit einem in der Erde bzw. einem unterirdischen Schacht angeordneten Gehäuse ausgeführt. Bei einem derartigen Hydrant besteht das Bedürfnis, den innerhalb des Gehäuses wirkenden Druck zu erfassen. Hierzu könnten geeignete Drucksensoren in entsprechende Bohrungen im Gehäuse eingeschraubt werden. Bei bereits verbauten Hydranten würde dies jedoch aufwendige Umbaumaßnahmen erfordern, wozu dann besonders bei Unterflurhydranten auch kosten- und zeitintensive Ausgrabungen und Montagearbeiten notwendig sind. Auch bei noch nicht installierten Hydranten müsste das Gehäuse entsprechend umgestaltet werden, um die Anbringung eines Sensors am Gehäuse zu ermöglichen.

Die US 6 058 957 A offenbart eine Armatur mit einem an eine Wasserleitung anschließbaren Gehäuse und einem in diesem verschiebbar angeordneten Ventilkörper, der durch einen als Spindel-Spindelmutter-Antrieb ausgebildeten Stellantrieb zwischen einer Offenstellung zum Öffnen eines Durchgangs von einer Zuströmöffnung zu einem Abgangskanal im Gehäuse und einer Schließstellung zur Absperrung des Durchgangs im Gehäuse verschiebbar ist. Der Stellantrieb enthält eine an einem Lagerteil axial gesicherte und drehbar gelagerte Spindelmutter und eine mit der Spindelmutter in Eingriff befindliche Stellspindel. Innerhalb des Gehäuses ist ein Durchflusssensor angeordnet.

In der EP 2 075 494 A1 ist ein Hydrant mit einem innerhalb eines Gehäuses angeordneten und durch einen Stellantrieb zwischen einer Öffnungs- und Schließstellung beweglichen Ventilkörper offenbart.

Die US 2012/004866 A1 offenbart eine Armatur, bei der in einem innerhalb eines Gehäuses angeordneten Ventilkörper ein Drucksensor untergebracht ist.

Aufgabe der Erfindung ist es, eine Armatur der eingangs genannten Art zu schaffen, bei der eine Druckmessung auch ohne aufwendige Umbaumaßnahmen oder Konstruktionsänderungen ermöglicht wird.

Diese Aufgabe wird durch eine Armatur mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Armatur ist im Bereich einer Trennstelle zwischen dem Gehäuse und dem Lagerteil mindestens ein Sensor zur Erfassung einer von dem Ventilkörper auf das Lagerteil wirkenden Kraft angeordnet. Durch Erfassung der von dem Ventilkörper auf das Lagerteil übertragenen Kraft kann so indirekt der innerhalb des Gehäuses wirkende Druck ermittelt werden. Die Erfassung der auf das Lagerteil wirkenden Kräfte erfolgt über eine Dehnungsmessung an mindestens einer der zur Befestigung des Lagerteils am Gehäuse dienenden Befestigungsschrauben. Je größer die von dem Ventilkörper auf das deckelförmige Lagerteil wirkende Kraft ist, desto mehr werden die Befestigungsschrauben gedehnt, so dass über einen an den Schrauben angebrachten Dehnungsmesssensor indirekt der innerhalb des Gehäuses wirkende Druck ermittelt werden kann. Für eine Druckmessung muss somit einfach eine Befestigungsschraube am Gehäuse gegen eine mit einem Dehnungsmesssensor ausgestattete Befestigungsschraube ausgetauscht werden. Eine kostenintensive Ausgrabung, Konstruktionsänderung und Anbringung einer Bohrung im Gehäuse ist hierfür nicht erforderlich. Die an der Oberseite des Gehäuses angeordneten Befestigungsschrauben sind auch im eingebauten Zustand des Hydranten einfach zugänglich und können ohne großen Aufwand leicht ersetzt werden.

Die Erfassung der auf das Lagerteil wirkenden Kräfte kann aber auch über eine Dehnungsmessung an Beilagscheiben erfolgen, die zwischen dem Lagerteil und dem Gehäuse oder zwischen den Befestigungsschrauben und dem Lagersteil angeordnet sind. Auch über die Dehnungsänderungen solcher Beilagscheiben kann die von dem Ventilkörper auf das Lagerteil übertragene Kraft erfasst und somit indirekt der innerhalb des Gehäuses wirkende Druck ermittelt werden. Diese Bauteile können ebenfalls einfach ausgebaut und ersetzt werden.

Bei einer für die Messung besonders vorteilhaften Ausgestaltung kann der z.B. als Dehnungsmesstreifen ausgebildete Sensor in eine zentrale Bohrung innerhalb der Befestigungsschraube eingebaut sein. Eine besonders exakte Messung kann dadurch erreicht werden, wenn der Sensor bei angezogener Befestigungsschraube genau an der Trennstelle liegt.

In einer vorteilhaften Ausführungsform kann der Sensor mit einer in oder auf dem Kopf der Befestigungsschraube angeordneten Mess- oder Auswerteelektronik verbunden sein. Der Sensor kann über Kabel oder Leitungen mit der Mess- oder Auswerteelektronik verbunden sein. Es ist aber auch eine kabellose Verbindung zwischen dem Sensor und der Mess- oder Auswerteelektronik z.B. über Funk oder dgl. möglich. Über die Mess- oder Auswerteelektronik kann auch der Datentransfer erfolgen.

Das Lagerteil kann zweckmäßigerweise als ein auf der Oberseite des Gehäuses befestigbarer Lagerdeckel ausgebildet sein. Das Lagerteil kann auch buchsenförmig ausgestaltet sein oder andere Ausgestaltungen aufweisen.

Die Armatur ist vorzugsweise als Schacht- oder Unterflurhydrant ausgeführt, kann aber auch als Schieber oder Oberflurhydrant ausgebildet sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine erfindungsgemäße Armatur in einem ersten Längsschnitt;
- **Figur 2**: die Armatur von Figur 1 in einem um 90° zum ersten Längsschnitt versetzten zweiten Längsschnitt und
- **Figur 3**: eine Detailansicht der Trennstelle zwischen einem Gehäuse und einem Lagerdeckel der in den Figuren 1 und 2 gezeigten Armatur.

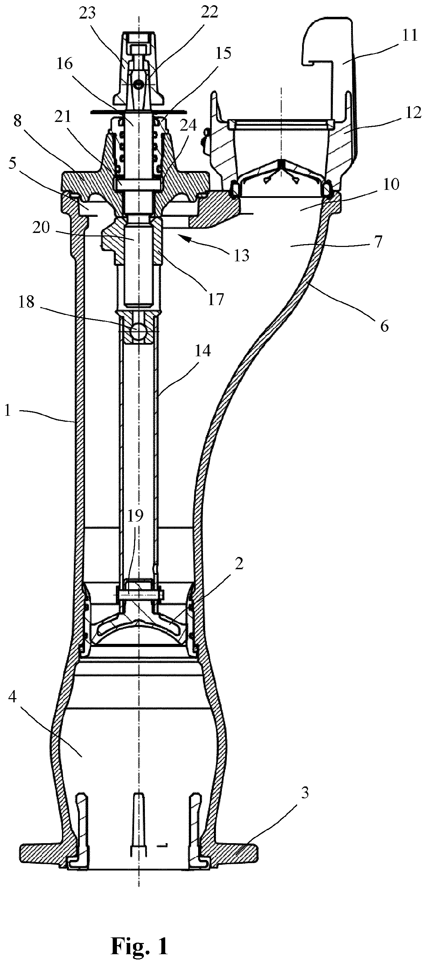

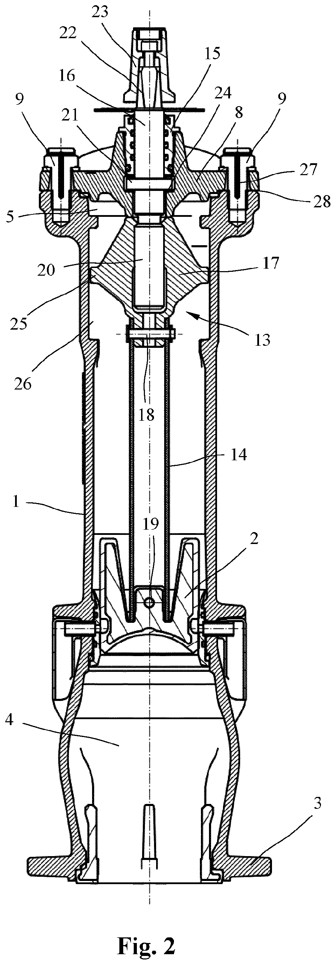

In den Figuren 1 und 2 ist eine hier als Unterflurhydrant ausgebildete Armatur mit einem an eine Wasserleitung anschließbaren Gehäuse 1 und einem in diesem verschiebbar geführten Ventilkörper 2 in verschiedenen Schnittansichten gezeigt.

Wie aus Figur 1 hervorgeht, weist das hier als Schachtrohr ausgebildete Gehäuse 1 einen zuströmseitigen Anschlussflansch 3 mit einem unteren Zuströmkanal 4, eine obere Öffnung 5 und einen seitlich abzweigenden Rohrstutzen 6 mit einem Abgangskanal 7 auf. Die zum Zuströmkanal 4 koaxiale obere Öffnung 5 des Gehäuses 1 ist durch ein hier als Lagerdeckel ausgebildetes Lagerteil 8 verschlossen. Das deckelförmige Lagerteil 8 ist durch in Figur 2 gezeigte Befestigungsschrauben 9 an dem Gehäuse 1 befestigt. An einem zur Öffnung 5 seitlich versetzten Ausgang 10 des Rohrstutzens 6 ist ein mit einer Anschlussklaue 11 zum Anschluss eines Standrohrs oder dgl. versehenes Anschlussteil 12 angeordnet. Außerdem kann am dem Anschlussteil 12 ein hier nicht dargestellter, schwenkbarer Schutzdeckel angeordnet sein.

Der Ventilkörper 2 ist innerhalb des Gehäuses 1 durch einen hier als Spindel-Spindelmutter-Antrieb ausgebildeten Stellantrieb 13 über ein Gestänge 14 zwischen einer in den Figuren 1 und 2 gezeigten oberen Sperrstellung und einer abgesenkten Offenstellung verschiebbar. In der in Figur 1 gezeigten oberen Sperrstellung des Ventilkörpers 2 wird ein Durchgang zwischen dem unteren Zuströmkanal 4 und dem oberen Abgangskanal 7 innerhalb des Gehäuses 1 gesperrt, während in einer abgesenkten Offenstellung des Ventilkörpers 2 das Wasser von dem Zuströmkanal 5 an dem Ventilkörper 2 vorbei in den Abgangskanal 7 zur Wasserentnahme strömen kann.

Der zur Umwandlung einer Drehbewegung in eine axiale Hubbewegung ausgebildete Stellantrieb 13 weist eine in dem deckelförmigen Lagerteil 8 über eine Lagerbuchse 15 drehbar gelagerte und gegen Axialbewegung gesicherte Stellspindel 16 und eine mit der Stellspindel 16 zusammenwirkende Spindelmutter 17 auf. Die Spindelmutter 17 ist über einen ersten Querstift 18 mit dem oberen Ende des Gestänges 14 verbunden.

An dem unteren Ende des Gestänges 14 ist der Ventilkörper 2 über einen zweiten Querstift 19 befestigt.

Die innerhalb der Lagerbuchse 15 drehbar gelagerte und radial abgedichtete Stellspindel 16 enthält einen gegenüber der Lagerbuchse 15 nach unten vorstehenden Gewindeschaft 20 mit einem Außengewinde, einen oberhalb des Gewindeschafts 20 angeordneten Ringbund 21 und einen gegenüber dem Lagergehäuse 1 nach oben vorstehenden oberen Endzapfen 22 mit einem konischen Vierkantende, auf das ein Vierkantschoner 23, ein Schlüssel, ein Handrad oder ein anderes Betätigungselement aufsetzbar ist. Durch den Ringbund 21 ist die Stellspindel 16 zwischen einer Ringschulter 24 im deckelförmigen Lagerteil 8 und der in das Lagerteil 8 eingeschraubten Lagebuchse 15 axial gesichert und über Gleitlagerscheiben drehbar gelagert. Die Spindelmutter 17 weist ein an das Außengewinde des Gewindeschafts 20 angepasstes Innengewinde auf und ist innerhalb des Gehäuses 1 über in Figur 2 gezeigte Fortsätze 25 gegen Verdrehung gesichert geführt. Hierzu greifen die Fortsätze 25 in entsprechende Längsnuten 26 an der Innenseite des Gehäuses 1 ein. Durch Drehung der Stellspindel 16 wird somit die Spindelmutter 17 axial verschoben, so dass das Ventilglied 2 über das Gestänge 14 zwischen einer oberen Schließstellung und abgesenkten Öffnungsstellungen verschoben werden kann.

Das in dem Zuströmkanal 4 befindliche Wasser übt sowohl in der Schließstellung als auch in den abgesenkten Öffnungsstellungen des Ventilkörpers 2 eine nach oben gerichtete Kraft auf den Ventilkörper 2 aus. Diese Kraft wird über das Gestänge 14 und den Stellantrieb 13 auf das über die Befestigungsschrauben 9 auf dem Gehäuse 1 befestigte deckelförmige Lagerteil 8 übertragen. Durch Erfassung der von dem Ventilkörper 2 auf das Lagerteil 8 wirkenden Kraft kann so indirekt der innerhalb des Gehäuses 1 wirkende Druck ermittelt werden. Auch indirekte Durchflussmessungen über die Erfassung der auf den Ventilkörper 2 wirkenden Strömungskräfte sind möglich.

Erfindungsgemäß erfolgt die Erfassung der auf das Lagerteil 8 wirkenden Kräfte über einen als Dehnungsmesssensor ausgebildeten Sensor 27 an mindestens einer der zur Befestigung des Lagerteils 8 am Gehäuse 1 dienenden Befestigungsschrauben 9. Der Sensor 27 ist im Bereich einer Trennstelle 28 zwischen dem Gehäuse 1 und dem deckelförmigen Lagerteil 8 angeordnet. Je größer die von dem Ventilkörper 2 auf das deckelförmige Lagerteil 8 wirkende Kraft ist, desto mehr werden die Befestigungsschrauben 9 gedehnt, so dass über einen an den Befestigungsschrauben 9 angebrachten Sensor 27 zur Erfassung der Dehnung der Befestigungsschrauben 9 indirekt der innerhalb des Gehäuses 1 wirkende Druck ermittelt werden kann. Die Erfassung der auf das Lagerteil 8 wirkenden Kräfte kann auch über Dehnungsmessung an Beilagscheiben erfolgen, die zwischen dem Lagerteil und dem Gehäuse oder zwischen den Befestigungsschrauben und dem Lagersteil angeordnet sind.

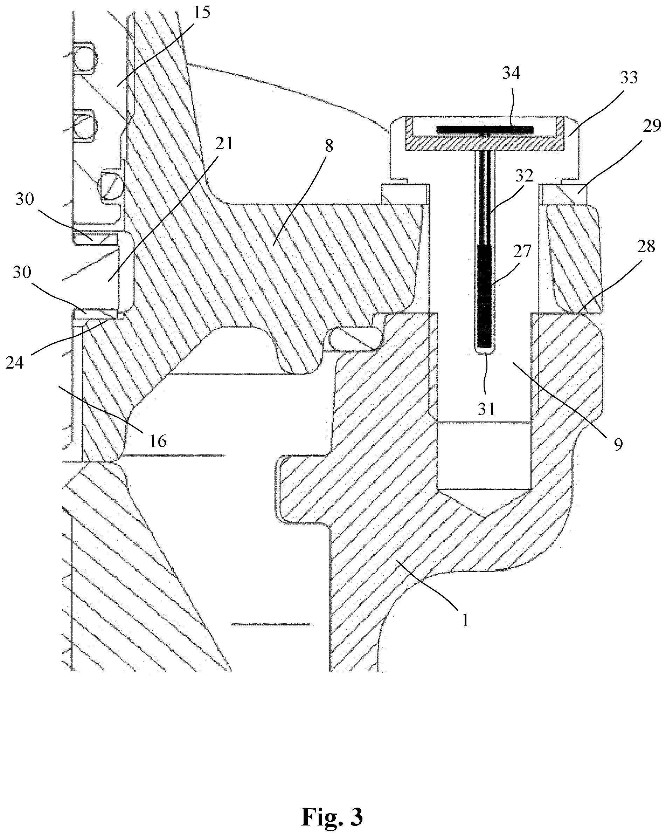

In Figur 3 ist besonders gut erkennbar, dass das als Lagerdeckel ausgebildete Lagerteil 8 über die Befestigungsschrauben 9 und Beilagscheiben 29 auf dem Gehäuse 1 festgeschraubt ist. In Figur 3 ist auch der Ringbund 21 gezeigt, über den die Stellspindel 16 zwischen einer Ringschulter 24 im Lagerdeckel 8 und der in den Lagerdeckel 8 eingeschraubten Lagebuchse 15 axial gesichert und über Gleitlagerscheiben 30 drehbar gelagert ist. In eine zentrale Bohrung 31 der Befestigungsschraube 9 ist der als Dehnungsmessstreifen ausgebildete Sensor 27 derart eingesetzt, dass er im festgezogenen Zustand der Befestigungsschraube 9 genau an der Trennstelle 28 liegt. Dadurch ist eine besonders genaue Messung erreichbar. Der Sensor 27 kann zweckmäßigerweise als zylindrischer Dehnungsmessstreifen ausgebildet und in die Bohrung 31 eingeklebt sein. Durch Kabel bzw. Leitungen 32 ist der Sensor 27 mit einer in dem Kopf 33 der Befestigungsschraube 9 integrierten Mess- und Auswertelektronik 34 verbunden. Über die Mess- und Auswerteelektronik 34 kann auch die Datenübertragung z.B. per Funk oder mittels Leitungen erfolgen. Vorzugsweise weist der Hydrant mehrere Befestigungsschrauben 9 mit einer vorstehend beschriebenen Sensorik auf. Es kann aber auch nur eine der Befestigungsschrauben 9 mit einem als Dehnungsmesssensor ausgebildeten Sensor 27 versehen sein.

Die Erfindung ist nicht auf das vorstehend beschriebene und in der Zeichnung dargestellte Ausführungsbeispiel beschränkt. So kann ein als Dehnungsmesssensor ausgebildeter Sensor z.B. auch an der zwischen dem Gehäuse 1 und dem Kopf 33 der Befestigungsschraube 9 angeordneten Beilagscheibe 27 oder einer zwischen dem Gehäuse 1 und dem deckelförmigen Lagerteil 8 angeordneten Beilag- oder Zwischenscheibe vorgesehen sein. Auch durch Erfassung einer Verformung der Beilagscheiben kann eine indirekte Druckmessung erfolgen. Außerdem ist die Erfindung nicht auf Hydranten beschränkt. Sie kann z.B. auch bei Schiebern oder ähnlichen Armaturen zum Einsatz gelangen.

### Bezugszeichenliste

- 1: Gehäuse
- 2: Ventilkörper
- 3: Anschlussflansch
- 4: Zuströmkanal
- 5: Obere Öffnung
- 6: Rohrstutzen
- 7: Abgangskanal
- 8: Lagerteil
- 9: Befestigungsschrauben
- 10: Ausgang
- 11: Anschlussklaue
- 12: Anschlussteil
- 13: Stellantrieb
- 14: Gestänge
- 15: Lagerbuchse
- 16: Stellspindel
- 17: Spindelmutter
- 18: Erster Querstift
- 19: Zweiter Querstift
- 20: Gewindeschaft
- 21: Ringbund
- 22: Endzapfen
- 23: Vierkantschoner
- 24: Ringschulter
- 25: Fortsatz
- 26: Längsnut
- 27: Sensor
- 28: Trennstelle
- 29: Beilagscheibe
- 30: Gleitscheibe
- 31: Bohrung
- 32: Kabel bzw. Leitung
- 33: Kopf
- 34: Mess- und Auswerteelektronik

## Patentansprüche

1. Armatur mit einem an eine Wasserleitung anschließbaren Gehäuse (1), einem im Gehäuse (1) verschiebbar angeordneten Ventilkörper (2), einem am Gehäuse (1) angeordneten Lagerteil (8) und einem Stellantrieb (13) zur Verschiebung des Ventilkörpers (2) zwischen einer Offenstellung zum Öffnen eines Durchgangs von einem Zuströmkanal (4) zu einem Abgangskanal (7) innerhalb des Gehäuses (1) und einer Schließstellung zur Absperrung des Durchgangs von dem Zuströmkanal (4) zum Abgangskanal (7), wobei der Stellantrieb (13) eine im Lagerteil (8) axial gesicherte und drehbar gelagerte Stellspindel (16) und eine mit dem Ventilkörper (2) verbundene Spindelmutter (17) zum Eingriff mit der Stellspindel (16) enthält, **dadurch gekennzeichnet, dass** im Bereich einer Trennstelle (28) zwischen dem Gehäuse (1) und dem Lagerteil (8) mindestens ein Sensor (27) zur Erfassung einer von dem Ventilkörper (2) auf das Lagerteil (8) wirkenden Kraft angeordnet ist, wobei der Sensor (27) als Dehnungsmesssensor an mindestens einer zur Befestigung des Lagerteils (8) am Gehäuse (1) dienenden Befestigungsschraube (9) ausgebildet ist.

2. Armatur nach Anspruch 1, **dadurch gekennzeichnet, dass** der Sensor (27) in einer zentralen Bohrung (31) der Befestigungsschraube (9) angeordnet ist.

3. Armatur nach Anspruch 2, **dadurch gekennzeichnet, dass** der Sensor (27) als zylindrischer Dehnungsmesstreifen ausgebildet und in die Bohrung (31) eingeklebt ist.

4. Armatur nach einem der Ansprüche 1 bis 3, **dadurch gekennzeichnet, dass** der Sensor (27) derart in der Befestigungsschraube (9) angeordnet ist, dass er bei angezogener Befestigungsschraube (9) genau an der Trennstelle (28) liegt.

5. Armatur nach einem der Ansprüche 1 bis 4, **dadurch gekennzeichnet, dass** der Sensor (27) mit einer in oder auf dem Kopf (33) der Befestigungsschraube (9) angeordneten Mess- oder Auswerteelektronik (34) verbunden ist.

6. Armatur nach Anspruch 5, **dadurch gekennzeichnet, dass** der Sensor (27) über Kabel bzw. Leitungen (32) oder über eine kabellose Datenverbindung mit der Mess- oder Auswerteelektronik (34) verbunden ist.

7. Armatur nach einem der Ansprüche 1 bis 6, **dadurch gekennzeichnet, dass** das Lagerteil (8) als ein auf der Oberseite des Gehäuses befestigbarer Lagerdeckel ausgebildet ist.

8. Armatur nach einem der Ansprüche 1 bis 7, **dadurch gekennzeichnet, dass** die Stellspindel (16) über einen Ringbund (21) zwischen einer Ringschulter (24) im Lagerteil (8) und einer in das Lagerteil (8) eingeschraubten Lagerbuchse (15) axial gesichert und drehbar gelagert ist.

9. Armatur nach einem der Ansprüche 1 bis 8, **dadurch gekennzeichnet, dass** der Ventilkörper (2) über ein Gestänge (14) mit der Spindelmutter (17) verbunden ist.

## Claims

1. Fitting with a housing (1) connectable to a water pipe, a valve body (2) displaceably arranged in the housing (1), a bearing part (8) arranged on the housing (1) and an actuator (13) for displacing the valve body (2) between an open position for opening a passage from an inflow channel (4) to an outflow channel (7) within the housing (1) and a closed position for shutting off the passage from the inflow channel (4) to the outflow channel (7), wherein the actuator (13) includes an actuating spindle (16) axially secured and rotatably mounted in the bearing part (8) and a spindle nut (17) connected to the valve body (2) for engagement with the actuating spindle (16), **characterized in in that** at least one sensor (27) for detecting a force acting on the bearing part (8) from the valve body (2) is arranged in the region of a separation point (28) between the housing (1) and the bearing part (8), the sensor (27) being designed as a strain gauging sensor on at least one fastening screw (9) serving to fasten the bearing part (8) to the housing (1).

2. Fitting according to claim 1, **characterised in that** the sensor (27) is arranged in a central bore (31) of the fastening screw (9).

3. Fitting according to claim 2, **characterised in that** the sensor (27) is formed as a cylindrical strain gauge and is glued into the bore (31).

4. Fitting according to any one of the preceding claims 1 to 3, **characterised in that** the sensor (27) is arranged in the fastening screw (9) in such a way that it lies exactly at the separation point (28) when the fastening screw (9) is tightened.

5. Fitting according to any one of the preceding claims 1 to 4, **characterised in that** the sensor (27) is connected to an electronic measuring or evaluation system (34) arranged in or on the head (33) of the fastening screw (9).

6. Fitting according to claim 5, **characterised in that** the sensor (27) is connected to the electronic measuring or evaluation system (34) via cables or lines (32) or via a wireless data connection.

7. Fitting according to any one of the preceding claims 1 to 6, **characterised in that** the bearing part (8) is designed as a bearing cover which can be fastened on the upper side of the housing.

8. Fitting according to any one of the preceding claims 1 to 7, **characterised in that** the adjusting spindle (16) is axially secured and rotatably mounted via an annular collar (21) between an annular shoulder (24) in the bearing part (8) and a bearing bushing (15) screwed into the bearing part (8).

9. Fitting according to any one of the preceding claims 1 to 8, **characterised in that** the valve body (2) is connected to the spindle nut (17) via a connecting rod (14).

## Revendications

1. Robinetterie avec un boîtier (1) pouvant être raccordé à une conduite d'eau, un corps de valve (2) disposé de manière coulissante dans le boîtier (1), une partie de palier (8) disposée sur le boîtier (1) et un entraînement de commande (13) pour le coulissement du corps de valve (2) entre une position d'ouverture pour ouvrir un passage à partir d'un canal d'arrivée (4) vers un canal de sortie (7) à l'intérieur du boîtier (1) et une position de fermeture pour le blocage du passage à partir du canal d'arrivée (4) vers le canal de sortie (7), dans laquelle l'entraînement de commande (13) contient une broche de commande (16) bloquée axialement dans la partie de palier (8) et montée en rotation et un écrou de broche (17) relié au corps de valve (2) pour être en prise avec la broche de commande (16), **caractérisée en ce qu'**au moins un capteur (27) pour la détection d'une force agissant à partir du corps de valve (2) sur la partie de palier (8) est disposé dans la zone d'un point de séparation entre le boîtier (1) et la partie de palier (8), dans laquelle le capteur (27) est réalisé en tant que capteur de contrainte sur au moins une vis de fixation (9) servant à la fixation de la partie de palier (8) sur le boîtier (1).

2. Robinetterie selon la revendication 1, **caractérisée en ce que** le capteur (27) est disposé dans un trou central (31) de la vis de fixation (9).

3. Robinetterie selon la revendication 2, **caractérisée en ce que** le capteur (27) est réalisé en tant que jauge de contrainte cylindrique et collé dans le trou (311).

4. Robinetterie selon l'une quelconque des revendications 1 à 3, **caractérisée en ce que** le capteur (27) est disposé dans la vis de fixation (9) de telle sorte qu'il se situe exactement sur le point de séparation (28) lorsque la vis de fixation (9) est serrée.

5. Robinetterie selon l'une quelconque des revendications 1 à 4, **caractérisée en ce que** le capteur (27) est relié à une électronique de mesure ou d'évaluation (34) disposée dans ou sur la tête (33) de la vis de fixation (9).

6. Robinetterie selon la revendication 5, **caractérisée en ce que** le capteur (27) est relié à l'électronique de mesure ou d'évaluation (34) par l'intermédiaire de câbles ou de fils (32) ou par l'intermédiaire d'une liaison de données sans câble.

7. Robinetterie selon l'une quelconque des revendications 1 à 6, **caractérisée en ce que** la partie de palier (8) est réalisée en tant que couvercle de palier pouvant être fixé sur la face supérieure du boîtier.

8. Robinetterie selon l'une quelconque des revendications 1 à 7, **caractérisée en ce que** la broche de commande (16) est bloquée axialement et montée de manière rotative par l'intermédiaire d'une collerette annulaire (21) entre un épaulement annulaire (24) dans la partie de palier (8) et un coussinet (15) vissé dans la partie de palier (8).

9. Robinetterie selon l'une quelconque des revendications 1 à 8, **caractérisée en ce que** le corps de valve (2) est relié à l'écrou de broche (17) par l'intermédiaire d'une tringlerie (14).
